# EUROPÄISCHE PATENTSCHRIFT

(11) **EP 2 386 876 B1**
(45) Veröffentlichungstag und Bekanntmachung des Hinweises auf die Patenterteilung: **10.07.2013**
(21) Anmeldenummer: 10161809.8
(22) Anmeldetag: 04.05.2010
(51) Int. Cl.: G01S 17/02, G01S 17/42, G01S 17/87, G01S 7/481, F16P 3/14

(54) **Entfernungsmessender optoelektronischer Sicherheitssensor und Verfahren zur Überwachung eines Überwachungsbereichs**
Optoelectronic safety sensor for measuring distance and method for monitoring a surveillance area
Capteur de sécurité optoélectronique mesurant l'éloignement et procédé de surveillance d'une zone de surveillance

(43) Veröffentlichungstag der Anmeldung: 16.11.2011
(73) Patentinhaber: Sick AG, 79183 Waldkirch (DE)
(72) Erfinder: Haberer, Manfred, 79359 Riegel (DE); Rothenberger, Bernd, 79206 Breisach (DE)
(74) Vertreter: Hehl, Ulrich

(56) Entgegenhaltungen:
- EP-A1- 1 635 107
- DE-A1- 2 818 942
- DE-A1- 10 152 543
- DE-A1- 10 324 628
- DE-A1-102004 043 515
- US-B2- 7 504 987
- UDO FRESE ET AL: "Verfahren zur Vermeidung von Kollisionengesteuert beweglicher Teile einer Anlage" DEUTSCHES FORSCHUNGSZENTRUM FUER KUENSTLICHE INTELLIGENZ, DEUTSCHLAND, Nr. RR-09-01, 1. April 2009 (2009-04-01), Seiten 1-30, XP002583617

## Beschreibung

Die Erfindung betrifft einen entfernungsmessenden optoelektronischen Sicherheitssensor und ein Verfahren zur Überwachung eines Überwachungsbereichs nach dem Oberbegriff von Anspruch 1 beziehungsweise 12.

Eine wichtige sicherheitstechnische Anwendung von optoelektronischen Sensoren ist die Absicherung von Maschinen, die eine Gefahrenquelle bilden. Der Sensor überwacht dabei ein Schutzfeld, das während des Betriebs der Maschine von Bedienpersonal nicht betreten werden darf. Erkennt der Sensor einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden.

Einige dieser Sensoren sind entfernungsmessend, erkennen also nicht nur Objekte an sich, sondern auch deren Abstand. Zu diesen Sensoren zählt ein Sicherheitslaserscanner, wie beispielsweise in der DE 43 40 756 A1 beschrieben. Ein von einem Laser erzeugter Lichtstrahl überstreicht mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren, wie sie für Laserscanner in der Sicherheitstechnik bevorzugt eingesetzt werden, misst der Laserscanner die Laufzeit, bis ein ausgesandter Lichtpuls wieder empfangen wird. Da der Laserscanner Winkel- und Entfernungsinformationen gewinnt, können zweidimensionale Positionen von Objekten in dem Überwachungsbereich ermittelt werden.

Eine andere Beispielgruppe sind 3D-Kameras, die in unterschiedlichen Technologien bekannt sind. Ein stereoskopisches Kamerasystem nimmt zwei oder mehr Bilder einer Szenerie aus unterschiedlichem Blickwinkel auf, ordnet Strukturen der verschiedenen Bilder einander zu und trianguliert aus der Disparität, also dem scheinbaren Versatz der Strukturen, und auf Basis der bekannten Perspektiven deren Entfernung. Bei einer Laufzeitkamera wird aktiv ein Lichtsignal ausgesandt und für jeden Pixel beispielsweise mittels Photonmischdetektion die Laufzeit bis zum Empfang des aus der Szenerie remittierten Lichts bestimmt. Wegen der bekannten und konstanten Lichtgeschwindigkeit liefert auch dies eine dreidimensionale Entfernungskarte. Es sind Bildsensoren bekannt, in deren intelligenten Pixel die Laufzeitbestimmung integriert ist.

Als letztes Beispiel seien tastende Lichtgitter genannt, in denen anders als in einem herkömmlichen Lichtgitter die einzelnen Strahlen als entfernungsmessende Lichttaster nach einem der bereits skizzierten Laufzeitverfahren ausgebildet sind.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung und/oder Vorsehen von einzelnen Testzielen mit definierten Reflexionsgraden, die unter den entsprechenden Scanwinkeln erkannt werden müssen.

Entfernungsmessende Sicherheitssensoren ermöglichen eine geometrische Konfiguration der Schutzfelder. Dazu gibt der Anwender vor dem eigentlichen Betrieb in einem Konfigurationsprogramm die gewünschte Form und Lage der Schutzfelder vor, die dann umgerechnet und dem Sensor aufgespielt werden. Es ist bekannt, im Betrieb zwischen mehreren Schutzfeldkonfigurationen umzuschalten, um sich dem jeweiligen Prozessschritt anzupassen. Jede einzelne dieser Schutzfeldkonfigurationen ist aber vorab unter großem Aufwand vom Anwender vorzunehmen. Gerade bei komplexeren Anwendungen, in denen sich die Schutzfelder mehreren Parametern anpassen sollen, wie beispielsweise der Geschwindigkeit und mitgeführten Traglast eines führerlosen Fahrzeugs (AGV, automated guided vehicle), ist dies zumindest mühsam und manchmal nicht mehr praktikabel.

Weiterhin ist üblich, jedem Schutzfeld ein Warnfeld vorzulagern, wobei Eingriffe in ein Warnfeld zunächst nur zu einer Warnung oder einer Vorsichtsmaßnahme wie einer reduzierten Geschwindigkeit führen, um den Schutzfeldeingriff und damit die Absicherung noch rechtzeitig zu verhindern und so die Verfügbarkeit der Anlage zu erhöhen. Dann erhöht sich der Konfigurationsaufwand noch einmal beträchtlich, denn zu jedem Schutzfeld muss nun auch noch ein zugehöriges Warnfeld konfiguriert werden.

Aus der EP 1 635 107 B1 ist bekannt, Schutzfelder dynamisch an Daten der Maschinensteuerung der zu überwachenden Maschine anzupassen. Das erfordert aber eine sehr komplexe Programmierung, deren Aufwand für einzelne Anwendungen im Feld nicht geleistet werden kann und die deshalb oft zu kostenintensiv und unflexibel ist.

Die EP 2 048 557 A1 offenbart eine mobile Vorrichtung, deren aktuelle Position von einem Sensor automatisch erfasst wird und mit der somit die gewünschten Schutzfeldgrenzen in einem Konfigurationsmodus unmittelbar an der abzusichernden Maschine bezeichnet werden können. Das ist zwar eine sehr intuitive und einfache Methode, ein Schutzfeld zu konfigurieren, beseitigt aber nicht die grundsätzliche Notwendigkeit, wie bei den anderen Konfigurationsverfahren sämtliche gewünschten Schutzfeldkonfigurationen samt zugehöriger Warnfelder vorab einlernen zu müssen.

Aus der DE 103 24 628 A1 ist ein Steuerverfahren für einen Roboter bekannt, der mit Sensorik zur Wahrnehmung seiner Umgebung ausgestattet ist, beispielsweise Laserscanner-Abstandssensoren, um Position und Entfernung einzelner Hindernisse zu ermitteln. Rings um den Roboter sind mehrere Bereiche definiert. Erfasste Objekte in einer innersten Schutzzone führen zu einem sofortigen Nothalt. Um diese Schutzzone erstreckt sich ein Überwachungsbereich, in dem Objekte zu Kursänderungen des Roboters führen. Den Überwachungsbereich umgibt ein Warnbereich, in dem eine Objekterfassung zu einer Drosselung der Geschwindigkeit aller Roboterbewegungen führt. In dem Überwachungsbereich kann eine sogenannte Entsicherungszone ausgespart werden, um Interaktionen mit dem Roboter zuzulassen.

Die Arbeit von Udo Frese et al. "Verfahren zur Vermeidung von Kollisionen gesteuert beweglicher Teile einer Anlage", Deutsches Forschungszentrum für künstliche Intelligenz, Nr. RR-09-01 vom 2. April 2009, XP-002583817, Seiten 1-25 befasst sich mit dem Kollisionsschutz bewegter Anlagenteile untereinander oder mit der Umwelt. Dabei wird ein 3D-Volumen der von den Anlagenteilen beanspruchten Bereiche als konvexe Hülle einschließlich eines Sicherheitspuffers aus allen Eigenbewegungen und den erforderlichen Bremszonen bestimmt. In einer Erweiterung des Verfahrens werden aus diesen Bremszonen Schutzfelder für einen Laserscanner berechnet.

Daher ist Aufgabe der Erfindung, einen entfernungsmessenden Sicherheitssensor derart weiterzubilden, dass die Konfiguration von Schutz- und Warnfeldern weiter erleichtert wird.

Diese Aufgabe wird durch einen Sicherheitssensor und ein Verfahren zur Überwachung eines Überwachungsbereichs gemäß Anspruch 1 beziehungsweise Anspruch 12 gelöst. Dabei geht die Erfindung von dem Grundgedanken aus, die Schutzfelder und Warnfelder nicht vorab vollständig vorzugeben, sondern deren Grundstruktur im Betrieb flexibel anzupassen. Anstelle von starren, vorzukonfigurierenden Warnfeldern erfolgt erfindungsgemäß eine Ausgabe des Abstandes erfasster Objekte zu dem Schutzbereich. Die Anlagensteuerung, an die der Sicherheitssensor angeschlossen ist, kann dann selbst entscheiden, ob dieser Abstand zur Einleitung einer Warnfunktion führen soll oder nicht.

Die Erfindung hat den Vorteil, dass eine Warnfeldkonfiguration vollständig entfallen kann. Der Anwender beziehungsweise die angeschlossene Steuerung erhält eine quantitative Bewertung der Umgebung hinsichtlich der Objektabstände und kann somit flexibel auf die Annäherung einer Person oder allgemein eine potentielle Gefahrensituation reagieren. Die Abstandsinformation ist aber nicht nur sicherheitstechnisch von Interesse, sondern auch für Automatisierungsfunktionen verwendbar. Beispielsweise bei der Fahrt eines führerlosen Fahrzeugs kann der Abstand zu einer seitlichen Wand eine nicht unbedingt sicherheitsrelevante, aber dennoch wichtige Messgröße sein.

Die von dem Sicherheitssensor bestimmte Position des Objekts kann eine zweidimensionale Position sein, wie sie beispielsweise ein Laserscanner mittels Winkel und Abstand ermittelt, aber auch eine dreidimensionale Position etwa aus den dreidimensionalen Bilddaten einer 3D-Kamera. Der Abstand zu dem Schutzfeld lässt sich im Übrigen auch in das Schutzfeld hinein berechnen, ergibt dann also keine Warnfunktion, sondern eine Information darüber, wie tief ein Eingriff in einen Schutzbereich erfolgt.

Der Schutzbereich ist bevorzugt ein zweidimensionales Schutzfeld, dessen Grenze der Auswertungseinheit anhand von Stützpunkten und die Stützpunkte verbindenden Kurvenzügen vorgebbar ist. Auf diese Weise wird in dem Sicherheitssensor ein Schutzfeld aus einfachen Vorgaben erzeugt. Die Kurvenzüge, mit denen die Stützpunkte zu verbinden sind, müssen nicht kommuniziert werden, sondern sind den Teilnehmern, also der Auswertungseinheit und der externen Einheit beispielsweise einer Anlagensteuerung bekannt. Am einfachsten ist dies, wenn Geradenstücke und nicht andere denkbare Kurvenstücke wie Bezier-Kurven die Stützstellen verbinden, somit insgesamt ein Polygonzug vorgebbar ist. Eine üblicherweise genutzte Kommunikationsschnittstelle des Sicherheitssensors mit ihrem Sicherheitsprotokoll hat nämlich eine sehr begrenzte Bandbreite, die eine Kommunikation von vollständigen Schutzfeldern während des Betriebs in den meisten Fällen gar nicht zulässt. Bei Vorgabe der Schutzfelder anhand von meist nur einigen wenigen Stützstellen sind nur wenige Daten für die Stützstellen selbst zu kommunizieren, wofür die Bandbreite ausreicht.

Die Auswertungseinheit ist bevorzugt dafür ausgebildet ist, den Abstand erfasster Objekte zu dem Schutzbereich nur einmal je Kurvenzug und/oder nur einmal je Stützpunkt zu bestimmen und auszugeben. Die reduziert den Bandbreitenbedarf für die Abstände erfasster Objekte zu dem Schutzfeld ebenfalls auf sehr wenige Daten. Man kann sich vorstellen, die Abstände nur in wenigen Klassen vorzugeben, beispielsweise mit 2 Bit als sehr nah, nah, mittel und fern, und spätestens mit 8 Bit oder 16 Bit lässt sich der Abstand für die meisten Anwendungen fein genug klassifizieren oder auflösen. Dabei ist der Abstand pro Kurvenzug bevorzugt die Länge des Lots von dem Objekt auf den Kurvenzug und der Abstand pro Stützpunkt die radiale Entfernung von dem Objekt zu dem Stützpunkt. Trotz der geringen Datenmenge kann der Anwender durch die Entfernungsinformationen für jeden Schutzbereichsabschnitt eine bessere Entscheidung hinsichtlich der Prozesssteuerung vornehmen.

Die Auswertungseinheit ist ferner bevorzugt dafür ausgebildet, den Stützpunkten automatisch weitere Stützpunkte hinzuzufügen oder automatisch Stützpunkte zu entfernen. Die Auswertungseinheit passt auf diese Weise die durch Benutzervorgaben definierten Schutzfelder an, beispielsweise um ein bekanntes Objekt aus dem Schutzbereich auszunehmen. Derartige selbsttätige Anpassungen von Schutzfeldern müssen entweder so klaren Regeln folgen, dass ihre sicherheitstechnische Unbedenklichkeit garantiert ist, oder der Anwender muss den Anpassungen zustimmen. Unter diesen Bedingungen ist auch denkbar, vorgegebene Stützpunkte von der Auswertungseinheit verschieben zu lassen.

Der Auswertungseinheit sind bevorzugt während des laufenden Absicherungsbetriebs Veränderungen der Lage von Stützpunkten, neue Stützpunkte und/oder zu entfernende Stützpunkte vorgebbar, so dass die Auswertungseinheit daraufhin mit dem somit neu erzeugten Schutzbereich weiterarbeitet. Nicht nur die Kommunikation von dem Sicherheitssensor nach außen wird damit erweitert, sondern auch die Ansteuerungsmöglichkeit des Sensors selbst. Statt bei einer Umschaltung der Schutzfelder wie herkömmlich nur eine fertig in dem Sicherheitssensor abgelegte Schutzfeldkonfiguration abzurufen, werden die vorhandenen Schutzfelder während des laufenden Betriebs durch eine äußere Vorgabe dynamisiert. Das ist herkömmlich gar nicht möglich, weil die Kommunikationsschnittstelle nicht die erforderliche Bandbreite zur Übergabe vollständiger Schutzfelder zur Verfügung stellt. Erfindungsgemäß wird nicht das Schutzfeld übergeben, sondern nur die Stützpunkte, aus denen sich die Auswertungseinheit das Schutzfeld selbst erzeugt. Mit nur wenigen Parametern wird so die Schutzbereichsgeometrie im laufenden Betrieb an die Gefahr angepasst.

Der Schutzbereich ist bevorzugt ein dreidimensionaler Schutzraumbereich, dessen Grenze der Auswertungseinheit anhand eines Dreiecksnetzes vorgebbar ist, wobei die Auswertungseinheit insbesondere dafür ausgebildet ist, den Abstand erfasster Objekte zu dem Schutzraumbereich nur einmal je Dreieck auszugeben, oder wobei der Auswertungseinheit während des laufenden Absicherungsbetriebs zusätzliche, veränderte oder zu entfernende Dreiecke vorgebbar sind. Der Abstand wird dann beispielsweise als Lot auf die jeweilige Dreiecksfläche durch den Inkreismittelpunkt berechnet. Statt eines Dreiecksnetzes können auch andere Beschreibungen einer 3D-Oberfläche verwendet werden, wobei beispielsweise jeweils ein Abstand zu den einzelnen Flächen, Kanten und/oder Ecken ausgegeben wird.

Die Auswertungseinheit ist bevorzugt dafür ausgebildet, Geschwindigkeiten auszugeben, mit denen sich Objekte dem Schutzbereich nähern oder sich von dem Schutzbereich entfernen. Die Geschwindigkeit lässt sich aus der Historie der Abstandsdaten und der verstrichenen Zeit berechnen und ermöglicht wesentlich besser angepasste Warnfunktionen, denn ein sich rasch einer Schutzbereichsgrenze näherndes Objekt ist wesentlich gefährlicher als ein langsames oder gar sich entfernendes Objekt.

Die Auswertungseinheit ist bevorzugt dafür ausgebildet, mindestens einen Schutzbereich als stummen Schutzbereich und damit als reinen Messbereich zu behandeln, indem für den stummen Schutzbereich keine Auswertung auf unzulässige Objekteingriffe stattfindet. Der Begriff Schutzbereich ist für diese zusätzlichen stummen Schutzbereiche etwas missverständlich, da es sich um reine Messbereiche ohne Sicherheitsfunktion handelt. Die Bezeichnung stummer Schutzbereich wird deshalb gewählt, weil seine sonstigen Eigenschaften mit einem Schutzbereich übereinstimmen, insbesondere hinsichtlich der Möglichkeiten zur Dynamisierung seiner Grenzen und der Ausgabe von Abstandsdaten. Ein Messbereich kann andererseits völlig anders verlaufen als der abzusichernde Gefahrenbereich, mit mehr oder weniger Stützstellen definiert werden als ein eigentlicher Schutzbereich und in einer anderen Frequenz ausgewertet werden. Außerdem sind sowohl bekannte als auch unbekannte Objekte in dem Messbereich erlaubt, da der Messbereich nicht sicherheitsrelevant ist. Dennoch können die Abstandsdaten des Messbereichs unterstützend für Warnfunktionen verwendet werden.

Der Sicherheitssensor ist bevorzugt eine 3D-Kamera, ein entfernungsmessender Sicherheitslaserscanner oder ein tastendes Lichtgitter. Diese Sensoren lassen die Definition von Schutzbereichen mit großen geometrischen Wahlmöglichkeiten zu.

In einer Weiterbildung der Erfindung weist ein System mindestens zwei der erfindungsgemäßen Sicherheitssensoren auf, wobei die Auswertungseinheit dafür ausgebildet ist, die Perspektiven der Sicherheitssensoren ineinander umzurechnen. Dazu sollten die Sicherheitssensoren zueinander automatisch oder manuell registriert werden, um sich auf ein gemeinsames Koordinatensystem zu einigen. Aus Anwendersicht entsteht dabei effektiv ein einziger Sicherheitssensor mit einem erweiterten Gesichtsfeld oder besseren Sichtwinkeln. Die Auswertungseinheit der einzelnen Sicherheitssensoren kann dabei auf die reine Erfassung reduziert sein. Die weitere Auswertung, beispielsweise in Bezug auf Schutzbereichsverletzungen, Abstände zu dem Schutzbereich oder die Dynamisierung der Schutzbereiche kann ebenfalls in jeder internen Auswertungseinheit erfolgen, aber auch ausschließlich oder verteilt in nur eine der Auswertungseinheiten oder eine externe Auswertungseinheit verlagert sein.

Die Auswertungseinheit ist bevorzugt dafür ausgebildet, die Schutzbereiche derart auf die Sicherheitssensoren zu verteilen, dass keine Absicherungslücken entstehen. Der Anwender gibt weiterhin nur die Grundstruktur des gewünschten Schutzbereichs vor. Das System nimmt ihm die Arbeit ab, dafür zu sorgen, dass das Schutzfeld ohne Abschattungen oder dergleichen von den mehreren Sicherheitssensoren überwachbar ist.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines erfindungsgemäßen Sicherheitssensors;
- Fig. 2: eine Draufsicht auf einen an einem Fahrzeug montierten Sicherheitssensor gemäß Figur 1 sowie auf dessen Schutzfeld und Überwachungsbereich;
- Fig. 3: eine Draufsicht auf ein Fahrzeug mit einem darauf montierten Sicherheitssensor gemäß Figur 1 zur Erläuterung von Schutzbereichsanpassungen;
- Fig. 4: eine Draufsicht auf ein System aus zwei Sicherheitssensoren und einen Roboterarm samt angepasstem Schutzfeld; und
- Fig. 5: eine Draufsicht auf einen Roboterarm mit einem Schutzbereich zu dessen Absicherung und einem weiteren, stummen Schutzbereich zur Ausnutzung von Messfunktionen.

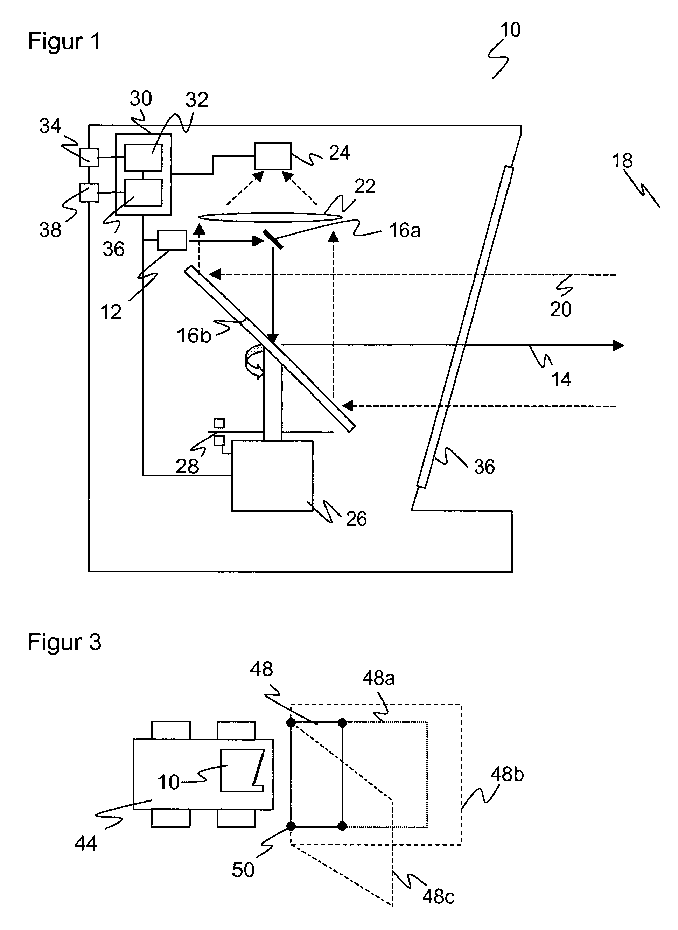

Figur 1 zeigt eine schematische Schnittdarstellung durch einen erfindungsgemäßen Sicherheitslaserscanner 10. Die Erfindung wird an diesem Beispiel beschrieben, umfasst aber auch andere entfernungsmessende optoelektronische Sicherheitssensoren einschließlich den in der Einleitung kurz beschriebenen 3D-Kameras und tastenden Lichtgittern.

Ein von einem Lichtsender 12, beispielsweise einem Laser, erzeugter Lichtstrahl 14, der einzelne Lichtimpulse aufweist, wird über Lichtablenkeinheiten 16a-b in einen Überwachungsbereich 18 gelenkt und dort von einem gegebenenfalls vorhandenen Objekt remittiert. Das remittierte Licht 20 gelangt wieder zu dem Sicherheitslaserscanner 10 zurück und wird dort über die Ablenkeinheit 16b und mittels einer Empfangsoptik 22 von einem Lichtempfänger 24 detektiert, beispielsweise einer Photodiode.

Die Lichtablenkeinheit 16b ist in der Regel als Drehspiegel ausgestaltet, die durch Antrieb eines Motors 26 kontinuierlich rotiert. Die jeweilige Winkelstellung der Lichtablenkeinheit 16b wird über einen Encoder 28 erfasst. Der von dem Lichtsender 12 erzeugte Lichtstrahl 14 überstreicht somit den durch die Rotationsbewegung erzeugten Überwachungsbereich 18. Wird ein von dem Lichtempfänger 24 empfangenes reflektiertes Lichtsignal 20 aus dem Überwachungsbereich 18 empfangen, so kann aus der Winkelstellung der Ablenkeinheit 16b mittels des Encoders 28 auf die Winkellage des Objektes in dem Überwachungsbereich 18 geschlossen werden.

Zusätzlich wird die Laufzeit der einzelnen Laserlichtpulse von ihrem Aussenden bis zu dem Empfang nach Reflexion an dem Objekt in dem Überwachungsbereich 18 ermittelt. Aus der Lichtlaufzeit wird unter Verwendung der Lichtgeschwindigkeit auf die Entfernung des Objektes von dem Sicherheitslaserscanner 10 geschlossen. Diese Auswertung erfolgt in einer Auswerteeinheit 30, die dafür mit dem Lichtsender 12, dem Lichtempfänger 24, dem Motor 26 und dem Encoder 28 verbunden ist. Somit stehen über den Winkel und die Entfernung zweidimensionale Polarkoordinaten aller Objekte in dem Überwachungsbereich 18 zur Verfügung.

Die Auswertungseinheit 30 weist eine Schutzbereichseingriffs-Erkennungseinheit 32 auf, die prüft, ob ein unzulässiges Objekt in einen Schutzbereich eingreift. Ist das der Fall, wird über einen Sicherheitsausgang 34 (OSSD, Output Signal Switching Device) ein Absicherungssignal an eine überwachte Gefahrenquelle, beispielsweise eine Maschine ausgegeben. Als weitere Untereinheit ist in der Auswertungseinheit 30 eine Abstandsermittlungseinheit 36 vorgesehen, die für erfasste Objekte in dem Überwachungsbereich 18 den Abstand zu den überwachten Schutzfeldern bestimmt. Diese Abstandsinformationen sind über eine Datenschnittstelle 38 ausgebbar. Umgekehrt kann die Auswertungseinheit 30 über die Datenschnittstelle 38 Daten empfangen, beispielsweise zur Festlegung von Schutzbereichsgrenzen. Die Schutzbereichseingriffs-Erkennungseinheit 32 und die Abstandsermittlungseinheit 36 sind untereinander zum Datenaustausch verbunden, insbesondere um Schutzbereichsgrenzen auszutauschen. Es ist denkbar, die beiden Ausgänge 34, 38 des Scanners zu einer gemeinsamen Sicherheitsschnittstelle zusammenzufassen.

Alle genannten Funktionskomponenten sind in einem Gehäuse 40 angeordnet, das frontseitig, also im Bereich des Lichtaus- und Lichteintritts, eine Frontscheibe 42 aufweist. Die Frontscheibe 42 ist zur Vermeidung von direkten Reflexionen in den Lichtempfänger 24 schräg gestellt, so dass Lichtstrahl 14 und Frontscheibe 42 einen Winkel ungleich neunzig Grad einschließen.

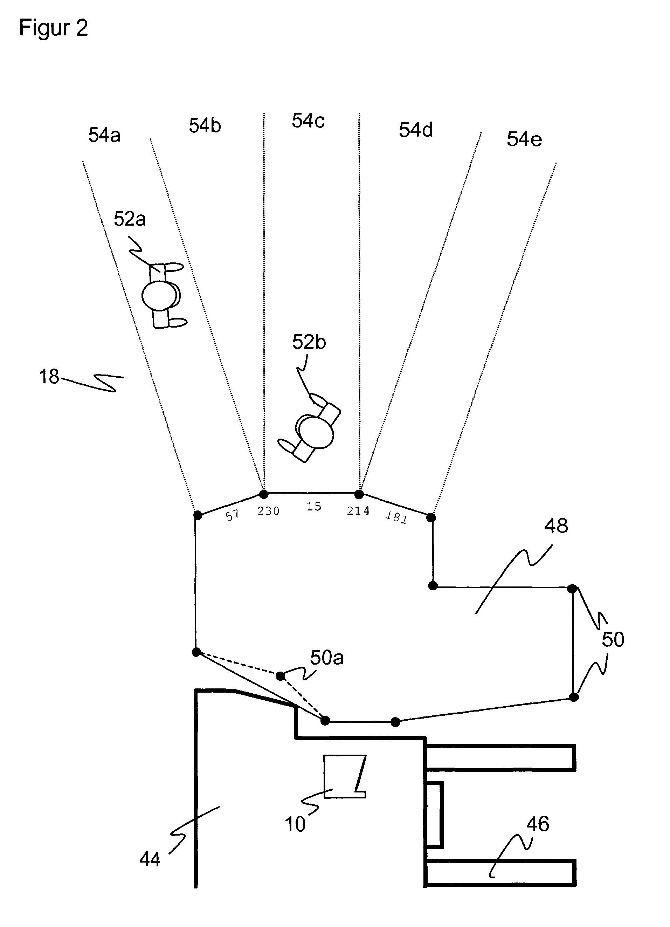

Figur 2 zeigt in einer Draufsicht ein Fahrzeug 44, auf dem ein erfindungsgemäßer Sicherheitslaserscanner 10 montiert ist. Dabei bezeichnen hier und im Folgenden gleiche Bezugszeichen die gleichen oder einander entsprechende Merkmale. Das Fahrzeug 44 weist eine seitliche Transportvorrichtung 46 auf, ist aber insgesamt nur als austauschbares Beispiel einer abzusichernden Gefahrenquelle zu verstehen.

In Fahrrichtung des Fahrzeugs 44 wird ein zweidimensionales Schutzfeld 48 als Schutzbereich aufgespannt. Die Schutzfeldgrenze ist durch mehrere Stützpunkte 50 definiert. Nur diese Stützpunkte werden von dem Anwender konfiguriert. Das geschieht entweder in einem Konfigurationsprogramm durch direkte Festlegung jedes Stützpunktes 50, oder der Anwender wird unterstützt, indem er einfachere Parameter vorgibt und daraus Stützpunkte abgeleitet werden. Beispielsweise werden dabei bestimmte Schutzfeldformen angeboten und mit wenigen Parametern weiter festgelegt, wie etwa die Schutzfeldausdehnung nach vorne oder hinten, und die notwendigen Stützpunkte dann automatisch gewählt.

Die Auswertungseinheit 30 erzeugt aus den Stützpunkten 50 auf Basis der bekannten eigenen Position und Orientierung selbsttätig alle erforderlichen Schutzfeldgrenzen, verbindet also die Stützstellen 50 zu einem Polygonzug und rechnet das entstehende Schutzfeld 48 in der erforderlichen Winkel- und Abstandsauflösung in Polarkoordinaten des Sicherheitslaserscanners 10 um.

Dabei werden mögliche Verdeckungsprobleme in der Auswertungseinheit 30 automatisch bereinigt und dafür gesorgt, dass das Schutzfeld 48 objektfrei ist, wie in Figur 2 durch eine gestrichelte Linie und einen automatisch ergänzten Stützpunkt 50a illustriert.

Der Sicherheitslaserscanner 10 erfasst auch Objekte 52a-b, die sich nicht innerhalb des Schutzfeldes 48, aber innerhalb des Überwachungsbereichs 18 befinden. Die integrierte Messfunktion der Abstandsermittlungseinheit 36 errechnet für solche Objekte 52a-b den minimalen Abstand zu dem Schutzfeld 48. Dazu wird jedem Polygonzug und jedem Stützpunkt ein Teilbereich 54a-e zugeordnet, wobei in Figur 2 der Übersichtlichkeit halber nur einige dieser Teilbereiche 54a-e eingezeichnet sind.

Die Zahlen unterhalb der Teilbereiche 54a-e illustrieren rein beispielhaft und in beliebigen Einheiten die Abstände. In dem Teilbereich 54a wird aufgrund des Objekts 52a ein mittlerer Abstand ausgegeben, der den Objektabstand senkrecht zu dem zugehörigen Polygonzug angibt. Entsprechendes gilt für den Teilbereich 54c, in dem das Objekt 52b deutlich näher an dem zugehörigen Polygonzug steht. Zu den Stützpunkten, die den Teilbereichen 54b, 54d zugeordnet sind, werden Abstände radial berechnet, dort werden aber in diesem Beispiel ebenso wie in dem Teilbereich 54e nur Objekte in einer Entfernung erfasst, die in der Figur 2 nicht mehr dargestellt ist. Ein maximaler Abstand codiert, dass in dieser Richtung kein Objekt 52 erfasst wird, während ein negativer Abstand die Tiefe angibt, mit der ein Objekt 52 in das Schutzfeld 48 eingreift.

Zusätzlich zu den Abstandsdaten einer aktuellen Momentaufnahme sind auch rückschauende Messdaten ausgebbar. So lässt sich beispielsweise die Geschwindigkeit der Objekte 52a-b sehr gut anhand von Abstandsänderungen abschätzen und sogar ein Objekttracking realisieren, indem die Abstände innerhalb der Teilbereiche 54a-e kontinuierlich verfolgt und bei Übertritt in einen anderen Teilbereich 54a-e geprüft wird, ob statt des verschwundenen Objekts 52 in dem einen Teilbereich 54a-e ein neues Objekt 52 in dem anderen Teilbereich 54a-b in einem für einen Übertritt plausiblen Abstand auftaucht.

Figur 3 zeigt erneut ein Fahrzeug 44 mit einem darauf montierten Sicherheitslaserscanner 10 in der Draufsicht. Ein in Fahrtrichtung vorgelagertes Schutzfeld 48 wird nur anhand der vier Stützpunkte 50 durch den Anwender als Minimalkonfiguration definiert, welche die grundlegende Gestalt festlegt. Während des Betriebs können die Stützpunkte 50 über die Datenschnittstelle 38 verändert werden. Beispielsweise sind für ein Schutzfeld 48a bei höherer Geschwindigkeit die beiden fernen Stützpunkte vorgeschoben, um mehr Sicherheitspuffer in Fahrtrichtung zu erhalten. Für ein Schutzfeld 48b ist die Größe in allen Richtungen heraufskaliert, um auch seitlich besser abzusichern. Für ein Schutzfeld 48c schließlich werden die fernen Stützpunkte 50 seitlich nach vorne verschoben, beispielsweise vor einem Abbiegevorgang.

Bei allen diesen dynamischen Schutzfeldveränderungen sind nur minimale Daten über die Datenschnittstelle 38 zu übertragen, beispielsweise zwei Verschiebevektoren, um von dem Schutzfeld 48 auf das Schutzfeld 48c zu wechseln. Die Schutzfelder 48, 48c selbst unterscheiden sich erheblich voneinander. Die Umrechnung erfolgt aber automatisch und während des laufenden Absicherungsbetriebs in der Auswertungseinheit 38. Das muss je nach Rechenleistung auch nicht notwendig von einem Auswertungszyklus auf den anderen innerhalb der sehr kurzen Ansprechzeit geschehen, denn es kann noch so lange mit der vorherigen Schutzfeldkonfiguration abgesichert werden, bis die neue Schutzfeldkonfiguration fertig berechnet ist.

Anstelle von Warnfeldern erhält eine Fahrzeugsteuerung nun die Abstandsdaten von erfassten Objekten 52 zu dem Schutzfeld 48. Aufgrund dessen kann beispielsweise die Geschwindigkeit verringert werden, wenn sich ein Objekt 52 dem Schutzfeld 48 nähert. Die Abstandsdaten können aber auch unabhängig von einer Sicherheitsfunktion genutzt werden, beispielsweise um einen gewünschten Abstand zu einer Seitenwand einzuhalten, rechtzeitig am Ende eines Ganges stehen zu bleiben oder an Engstellen automatisch die Geschwindigkeit anzupassen.

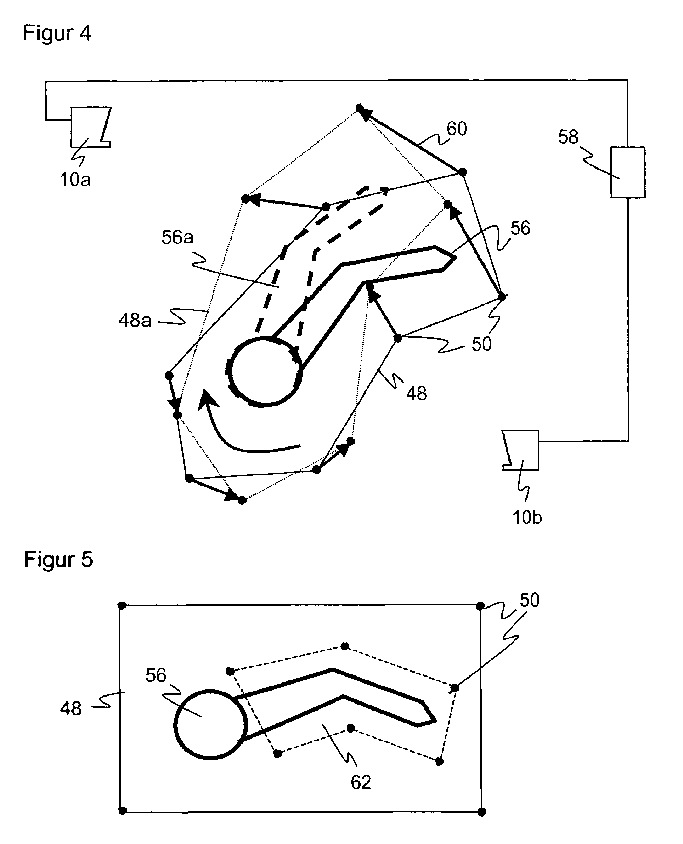

Figur 4 zeigt in einer Draufsicht ein System aus zwei erfindungsgemäßen Sicherheitslaserscannern 10a-b an einem Roboter 56. Durch die Kombination mehrerer Sicherheitslaserscanner 10a-b können gegenüber nur einem Sicherheitslaserscanner 10a-b abgeschattete Bereiche überwacht und allgemein das Sichtfeld und die Perspektive verbessert werden. Beide Sicherheitslaserscanner 10a-b sind an eine gemeinsame Sicherheitssteuerung 58 angeschlossen, und sämtliche Auswertungsfunktionen sind in beliebiger Weise auf die internen Auswertungseinheiten 30 der Sicherheitslaserscanner 10a-b und die Sicherheitssteuerung 58 verteilt. Durch gemeinsame Registrierung in ein gemeinsames Koordinatensystem sind die Erfassungsdaten der beiden Sicherheitslaserscanner 10a-b ineinander umrechenbar. Effektiv entsteht durch das System aus den Sicherheitslaserscannern 10a-b und der Sicherheitssteuerung 58 ein einziger Sensor mit verbessertem Sichtbereich. Dabei werden zu überwachende Schutzfeldteilbereiche so auf die einzelnen Sicherheitslaserscanner 10a-b verteilt, dass keine Abschattungen oder dergleichen auftreten.

Die geplanten Bewegungen des Roboterarms 56 sind der Anlagensteuerung bekannt. Somit ist nicht erforderlich, den gesamten potentiellen Aktionsradius des Roboterarms 56 abzusichern, sondern gleichsam nur eine Hülle um den Roboterarm 56 als Schutzfeld 48 zu definieren und mitzubewegen. Dreht sich in dem dargestellten Beispiel der Roboterarm aus der mit einer durchgezogenen Linie gezeichneten Position 56 in eine mit gestrichelter Linie gezeichnete Position 56a, so wird das Schutzfeld 48 durch Angabe von Verschiebungen 60 der Stützpunkte 50 zu dem Schutzfeld 48a angepasst und dadurch mitbewegt.

Das Schutzfeld 48a kann auch vorauseilend kumulativ zu dem Schutzfeld 48 geprüft werden. Ein Eingriff in das noch nicht aktive Schutzfeld 48a führt nicht zu einem Nothalt, ist aber eine Warnung für die Robotersteuerung, dass die geplante Bewegung aller Voraussicht nach abgebrochen wird, so dass entsprechende Umplanungen oder Bremsmanöver vorgenommen werden können.

Figur 5 zeigt einen Roboterarm 56 in der Draufsicht, der durch ein umhüllendes Schutzfeld 48 abgesichert wird. Durch seine einfache Geometrie sind die Abstandsdaten gegenüber Objekten 52 nur entsprechend grob aufgelöst und deshalb für Automatisierungsfunktionen, beispielsweise eine Kontrolle der realen gegenüber der intendierten Bewegung des Roboterarms 56, nur bedingt geeignet. Andererseits soll die Form des Schutzfeldes 48 in der Regel durch die Sicherheitsfunktion und nicht durch zusätzliche Anforderungen bestimmt sein. Um dies zu entkoppeln, ist ein zusätzliches sogenanntes stummes Schutzfeld oder Messfeld 62 vorgesehen. Es schmiegt sich in einer für die Vermeidung von Unfällen nicht unbedingt ausreichenden Weise wesentlich dichter an den Roboterarm 56 an und folgt dessen Kontur.

Eingriffe in das Messfeld 62 werden möglicherweise registriert, führen aber nicht zu einer sicherheitsgerichteten Abschaltung. Die Abstandsdaten, also beispielsweise je ein senkrechter Abstandswert je Kurvenzug und ein radialer Abstandswert je Stützpunkt 50, werden aber wie bei einem Schutzfeld 48 ermittelt und ausgegeben. Eine Kombination von Schutzfeldern 48 und Messfeldern 60 kann also dazu genutzt werden, dass die Abstandsermittlungseinheit 36 passende Daten sowohl für die Sicherheitsfunktion als auch für Automatisierungsaufgaben zur Verfügung stellt.

Die Erfindung bietet somit insgesamt eine Möglichkeit für den Anwender, auf einfache Weise Schutzfelder 48 geometrisch zu definieren und zur Laufzeit dynamisch zu verändern. Dabei beinhaltet das Schutzfeld 48 gleichzeitig eine integrierte Messfunktion, um räumliche Abstände zwischen Schutzfeldern 48 und real gemessenen Objekten 52 in gewünschten Richtungen zu ermitteln. Es entsteht ein Werkzeug zur Kommunikation mit dem Sicherheitssensor 10, welches zwischen den herkömmlichen Ansätzen vermittelt, entweder mit einem sehr einfachen Sensor lediglich die vollständigen Rohdaten zur Weiterverarbeitung auszugeben und vollständige Schutzfelddefinitionen anzunehmen oder mit einem sehr kompliziert aufgebauten Sensor die Schutzfelddefinition und dynamische Anpassung an Daten einer Maschinensteuerung vollständig zu automatisieren. Indem erfindungsgemäß vorverarbeitete Abstandsdaten ausgegeben und sowohl diese Abstandsdaten als auch anfänglich zu konfigurierende wie dynamisch zu verändernde Schutzfelder auf das einfache Gitternetz der Stützpunkt bezogen werden, entsteht mit wenig Datenaustausch ein hochflexibles und einfach zu bedienendes Sicherheitssystem, das zugleich Automatisierungsfunktionen unterstützt.

Obwohl die Erfindung anhand einzelner Ausführungsformen und Darstellungen beschrieben wird, sind diese nicht voneinander isoliert zu verstehen, sondern Mischformen möglich. So ist beispielsweise ein System aus mehreren Sicherheitslaserscannern 10a-b nicht auf die Überwachung eines Roboterarms beschränkt, und die dynamischen Schutzfeldanpassungen sind mit einer Abstandsmessung zu den Schutzfeldgrenzen kombinierbar, obwohl beide Funktionen nacheinander anhand von Figur 2 und Figur 3 erläutert sind.

## Patentansprüche

1. Entfernungsmessender optoelektronischer Sicherheitssensor (10) zur Überwachung eines Überwachungsbereichs (18) mit mindestens einem Schutzbereich (48), wobei der Sicherheitssensor (10) einen Lichtempfänger (24) zur Erzeugung eines Empfangssignals bei Lichtempfang aus dem Überwachungsbereich (18) sowie eine Auswertungseinheit (30, 32) aufweist, die dafür ausgebildet ist, mit Hilfe des Empfangssignals Objekte (52) in dem Überwachungsbereich (18) zu erfassen und deren Position einschließlich deren Abstand zu dem Sicherheitssensor (10) zu ermitteln und bei Erkennung eines unzulässigen Objekteingriffs (52) in einen Schutzbereich (48) ein Absicherungssignal auszugeben,
wobei die Auswertungseinheit (30, 32, 36) dafür ausgebildet ist, für eine geometrische Konfiguration des Schutzbereichs (48) Daten zur Festlegung von Schutzbereichsgrenzen zu empfangen, welche die gewünschte Lage und Form des Schutzbereichs (48) vorgeben, **dadurch gekennzeichnet, dass** die Auswertungseinheit eine Abstandsermittlungseinheit (36) umfasst, die dazu ausgebildet ist, den minimalen Abstand erfasster Objekte (52) zu dem Schutzbereich (48) zu errechnen und auszugeben, so dass eine angeschlossene Steuerung anhand des Abstands entscheiden kann, ob eine Warnfunktion einzuleiten ist.

2. Sicherheitssensor (10) nach Anspruch 1,
wobei der Schutzbereich (48) ein zweidimensionales Schutzfeld ist, dessen Grenze der Auswertungseinheit (30) anhand von Stützpunkten (50) und die Stützpunkte (50) verbindenden Kurvenzügen, insbesondere als Polygonzug vorgebbar ist.

3. Sicherheitssensor (10) nach Anspruch 2,
wobei die Auswertungseinheit (30) dafür ausgebildet ist, den Abstand erfasster Objekte (52) zu dem Schutzbereich (48) nur einmal je Kurvenzug und/oder nur einmal je Stützpunkt (50) zu bestimmen und auszugeben.

4. Sicherheitssensor (10) nach Anspruch 2 oder 3,
wobei die Auswertungseinheit (30) dafür ausgebildet ist, den Stützpunkten (50) automatisch weitere Stützpunkte (50) hinzuzufügen oder automatisch Stützpunkte (50) zu entfernen.

5. Sicherheitssensor (10) nach einem der vorhergehenden Ansprüche,
wobei der Auswertungseinheit (30) während des laufenden Absicherungsbetriebs Veränderungen der Lage von Stützpunkten(50), neue Stützpunkte (50) und/oder zu entfernende Stützpunkte (50) vorgebbar sind, so dass die Auswertungseinheit (30) daraufhin mit dem somit neu erzeugten Schutzbereich (48) weiterarbeitet.

6. Sicherheitssensor (10) nach einem der vorhergehenden Ansprüche,
wobei der Schutzbereich ein dreidimensionaler Schutzraumbereich ist, dessen Grenze der Auswertungseinheit (30) anhand eines Dreiecksnetzes vorgebbar ist, wobei die Auswertungseinheit (30) insbesondere dafür ausgebildet ist, den Abstand erfasster Objekte (52) zu dem Schutzraumbereich nur einmal je Dreieck auszugeben, oder wobei der Auswertungseinheit (30) während des laufenden Absicherungsbetriebs zusätzliche, veränderte oder zu entfernende Dreiecke vorgebbar sind.

7. Sicherheitssensor (10) nach einem der vorhergehenden Ansprüche,
wobei die Auswertungseinheit (30) dafür ausgebildet ist, Geschwindigkeiten auszugeben, mit denen sich Objekte (52) dem Schutzbereich (48) nähern oder sich von dem Schutzbereich (48) entfernen.

8. Sicherheitssensor (10) nach einem der vorhergehenden Ansprüche,
wobei die Auswertungseinheit (30) dafür ausgebildet ist, mindestens einen zusätzlichen Schutzbereich als stummen Schutzbereich (60) und damit als reinen Messbereich zu behandeln, indem für den stummen Schutzbereich (60) keine Auswertung auf unzulässige Objekteingriffe (52) stattfindet.

9. Sicherheitssensor (10) nach einem der vorhergehenden Ansprüche,
der eine 3D-Kamera, ein entfernungsmessender Sicherheitslaserscanner oder ein tastendes Lichtgitter ist.

10. System aus mindestens zwei optoelektronischen Sicherheitssensoren (10a-b) nach einem der vorhergehenden Ansprüche, wobei die Auswertungseinheit (30,.58) dafür ausgebildet ist, die Perspektiven der Sicherheitssensoren (10a-b) ineinander umzurechnen.

11. System nach Anspruch 10,
wobei die Auswertungseinheit (30, 58) dafür ausgebildet ist, die Schutzbereiche (48) derart auf die Sicherheitssensoren (10a-b) zu verteilen, dass keine Absicherungslücken entstehen.

12. Verfahren zur Überwachung eines Überwachungsbereichs (18) mit mindestens einem Schutzbereich (48), wobei Licht aus dem Überwachungsbereich (18) in einem Sicherheitssensor (10) in ein Empfangssignal umgewandelt, mit Hilfe des Empfangssignals Objekte (52) in dem Überwachungsbereich (18) erfasst, deren Position einschließlich deren Abstand zu dem Sicherheitssensor (10) ermittelt und bei Erkennung eines unzulässigen Objekteingriffs (52) in einen Schutzbereich (48) ein Absicherungssignal ausgegeben wird,
wobei der Sicherheitssensor (10) zur Festlegung von Schutzbereichsgrenzen Daten empfängt, welche die gewünschte Lage und Form des Schutzbereichs (48) vorgeben, und damit den Schutzbereich (48) geometrisch konfiguriert, **dadurch gekennzeichnet, dass** der minimale Abstand erfasster Objekte (52) zu dem Schutzbereich (48) errechnet und ausgegeben wird und dass anhand des Abstands entschieden wird, ob eine Warnfunktion einzuleiten ist.

13. Verfahren nach Anspruch 12,
wobei der Schutzbereich (48) ein zweidimensionales Schutzfeld ist, dessen Grenze anhand von Stützpunkten (50) und die Stützpunkte (50) verbindenden Kurvenzügen vorgegeben wird, wobei der Abstand erfasster Objekte (52) zu dem Schutzbereich (48) nur einmal je Kurvenzug und/oder nur einmal je Stützpunkt (50) bestimmt und ausgegeben wird.

14. Verfahren nach Anspruch 13,
wobei dem Sicherheitssensor (10) während des laufenden Absicherungsbetriebs durch Anweisungen, die Lage von Stützpunkten (50) zu verändern, neue Stützpunkte (50) hinzuzufügen oder vorhandene Stützpunkte (50) zu entfernen, dynamisch veränderte Schutzbereiche (48) vorgegeben werden.

15. Verfahren nach einem der Ansprüche 12 bis 14,
wobei mindestens ein zusätzlicher Schutzbereich (60) als stummer Schutzbereich und damit als reiner Messbereich behandelt wird, indem für den stummen Schutzbereich (60) lediglich Abstände erfasster Objekte (52) zu dem Schutzbereich (60) bestimmt und ausgegeben, nicht jedoch unzulässige Objekteingriffe (52) erkannt werden, so dass ein Eingriff in einen stummen Schutzbereich (60) zu keinem Absicherungssignal führt.

## Claims

1. A distance measuring optoelectronic safety sensor (10) for monitoring a monitored zone (18) having at least one protected zone (48), wherein the safety sensor (10) has a light receiver (24) for generating a received signal on light reception from the monitored zone (18) as well as an evaluation unit (30, 32) which is designed to detect objects (52) in the monitored zone (18) with the aid of the received signal and to determine their position, including their distance from the safety sensor (10), and to output a securing signal on recognition of an unpermitted object intrusion (52) into a protected zone (48),
wherein the evaluation unit (30, 32, 36) is designed to receive data for fixing protected zone boundaries for a geometrical configuration of the protected zone (48), said data predefining the desired position and shape of the protected zone (48), **characterized in that** the evaluation unit includes a distance determination unit (36) which is designed to recognize and output the minimal distance of detected objects (52) from the protected zone (48) so that a connected control can decide with reference to the distance whether a warning function is to be initiated.

2. A safety sensor (10) in accordance with claim 1,
wherein the protected zone (48) is a two-dimensional protected field whose boundary can be predefined for the evaluation unit (30) with reference to sampling points (50) and to curve series, in particular as a polygon series, connecting the sampling points (50).

3. A safety sensor (10) in accordance with claim 2,
wherein the evaluation unit (30) is designed to determine and output the distance of detected objects (52) from the protected zone (48) only once per curve series and/or only once per sampling point (50).

4. A safety sensor (10) in accordance with claim 2 or claim 3,
wherein the evaluation unit (30) is designed to add further sampling points (50) to the samplings points (50) automatically or to remove sampling points (50) automatically.

5. A safety sensor (10) in accordance with any one of the preceding claims,
wherein changes in the position of sampling points (50), new sampling points (50) and/or sampling points (50) to be removed can be predefined for the evaluation unit (30) during the ongoing securing operation so that the evaluation unit (30) thereupon continues to work with the thus newly generated protected zone (48).

6. A safety sensor (10) in accordance with any one of the preceding claims,
wherein the protected zone is a three-dimensional protected area zone whose boundary can be predefined for the evaluation unit (30) using a triangular net, with the evaluation unit (30) in particular being designed to output the spacing of detected objects (52) from the protected area zone only once per triangle, or wherein additional or modified triangles or triangles to be removed can be defined for the evaluation unit (30) during the ongoing securing operation.

7. A safety sensor (10) in accordance with any one of the preceding claims,
wherein the evaluation unit (30) is designed to output speeds at which objects (52) approach the protected zone (48) or move away from the protected zone (48).

8. A safety sensor (10) in accordance with any one of the preceding claims,
wherein the evaluation unit (30) is designed to treat at least one additional protected zone as a mute protected zone (60,) and thus to treat it as a purely measuring zone, in that no evaluation for unpermitted object intrusions (52) takes place for the mute protected zone (60).

9. A safety sensor (10) in accordance with any one of the preceding claims,
which is a 3D camera, a distance measuring safety laser scanner or a scanning light grid.

10. A system of at least two optoelectronic safety sensors (10a-b) in accordance with any one of the preceding claims, wherein the evaluation unit (30, 58) is designed to convert the perspectives of the safety sensors (10a-b) into one another.

11. A system in accordance with claim 10,
wherein the evaluation unit (30, 58) is designed to distribute the protected zones (48) over the safety sensors (10a-b) so that no securing gaps arise.

12. A method for the monitoring of a monitored zone (18) having at least one protected zone (48), wherein light from the monitored zone (18) is converted in a safety sensor (10) into a received signal, wherein objects (52) in the monitored zone (18) are detected with the aid of the received signal, wherein their position, including their distance from the safety sensor (10), is determined and wherein, on recognition of an unpermitted object intrusion (52) into a protected zone (48), a securing signal is output, wherein the safety sensor (10) receives data for fixing protected zone boundaries, said data predefining the desired position and shape of the protected zone (48) and thus geometrically configuring the protected zone, **characterised in that** the minimal distance of detected objects (52) from the protected zone (48) is calculated and output; and **in that** a decision is made with reference to the spacing whether a warning function is to be initiated.

13. A method in accordance with claim 12,
wherein the protected zone (48) is a two-dimensional protected field whose boundary is defined with reference to sampling points (50) and by curve series connecting the sampling points (50), wherein the distance of detected objects (52) from the protected zone (48) is only determined and output once per curve series and/or only once per sampling point (50).

14. A method in accordance with claim 13,
wherein dynamically changed protected zones (48) are predefined for the safety sensor (10) during the ongoing securing operation by instructions to change the position of sampling points (50), to add new sampling points (50) or to remove existing sampling points (50).

15. A method in accordance with any one of the claims 12 to 14, wherein at least one additional protected zone (60) is treated as a mute protected zone and thus as a pure measuring zone in that only distances of detected objects (52) from the protected zone (60) are determined and output for the mute protected zone (60), but unpermitted object intrusions (52) are not recognised so that an intrusion into a mute protected zone (60) does not result in a securing signal.

## Revendications

1. Capteur de sécurité optoélectronique mesurant l'éloignement (10) pour surveiller une zone de surveillance (18) avec au moins une zone de protection (48), dans lequel le capteur de sécurité (10) comprend un récepteur de lumière (24) pour engendrer un signal de réception lors de la réception de lumière provenant de la zone de surveillance (18) ainsi qu'une unité d'évaluation (30, 32) qui est réalisée pour, avec l'aide du signal de réception, détecter des objets (52) dans la zone de surveillance (18) et pour déterminer leur position, y compris leur distance par rapport au capteur de sécurité (10) et, lors de la reconnaissance d'une intervention inadmissible d'un objet (52) dans une zone de protection (48), pour délivrer un signal de sécurisation,
dans lequel l'unité d'évaluation (30, 32, 36) est réalisée, pour une configuration géométrique de la zone de protection (48), pour recevoir des données destinées à fixer les limites de la zone de protection, lesquelles imposent la position et la forme souhaitées de la zone de protection (48),
**caractérisé en ce que** l'unité d'évaluation comprend une unité de détermination de distance (36), laquelle est réalisée pour calculer et délivrer la distance minimum d'objets détectés (52) par rapport à la zone de protection (48), de sorte qu'une commande branchée est capable de décider au moyen de la distance s'il s'agit de déclencher une fonction d'avertissement.

2. Capteur de sécurité (10) selon la revendication 1,
dans lequel la zone de protection (48) est une zone de protection bidimensionnelle, dont la limite est susceptible d'être imposée à l'unité d'évaluation (30) au moyen de points de soutien (50) et de tracés en courbe qui relient les points de soutien (50), en particulier sous la forme d'un tracé polygonal.

3. Capteur de sécurité (10) selon la revendication 2,
dans lequel l'unité d'évaluation (30) est réalisée pour déterminer et délivrer la distance d'objets détectés (52) par rapport à la zone de protection (48) une fois seulement pour chaque tracé en courbe et/ou une fois seulement pour chaque point de soutien (50).

4. Capteur de sécurité (10) selon la revendication 2 ou 3,
dans lequel l'unité d'évaluation (30) est réalisée pour ajouter automatiquement aux points de soutien (50) d'autres points de soutien (50) ou pour enlever automatiquement des points de soutien (50).

5. Capteur de sécurité (10) selon l'une des revendications précédentes,
dans lequel, pendant le fonctionnement de sécurisation en cours, des modifications de position de points de soutien (50), des nouveaux points de soutien (50) et/ou des points de soutien (50) à supprimer peuvent être imposés à l'unité d'évaluation (30), de sorte que l'unité d'évaluation (30) poursuit ensuite son travail avec la nouvelle zone de protection ainsi engendrée (48).

6. Capteur de sécurité (10) selon l'une des revendications précédentes,
dans lequel la zone de protection est une zone de protection spatiale tridimensionnelle, dont la limite peut être imposée à l'unité d'évaluation (30) au moyen d'un réseau de triangles, dans lequel l'unité d'évaluation (30) est en particulier réalisée pour délivrer la distance d'objets détectés (52) par rapport à la zone de protection spatiale une fois seulement par triangle, ou dans lequel des triangles supplémentaires, modifiés ou à supprimer peuvent être imposés à l'unité d'évaluation (30) pendant le fonctionnement de sécurisation en cours.

7. Capteur de sécurité (10) selon l'une des revendications précédentes,
dans lequel l'unité d'évaluation (30) est réalisée pour délivrer des vitesses avec lesquelles des objets (52) se rapprochent de la zone de protection (48) ou s'éloignent depuis la zone de protection (48).

8. Capteur de sécurité (10) selon l'une des revendications précédentes,
dans lequel l'unité d'évaluation (30) est réalisée pour traiter au moins une zone de protection supplémentaire comme une zone de protection "muette" (60) et ainsi comme une pure zone de mesure, du fait qu'il ne se produit aucune évaluation quant à des interventions inadmissibles d'objets (52) pour la zone de protection muette (60).

9. Capteur de sécurité (10) selon l'une des revendications précédentes, qui est une caméra 3D, un scanner de sécurité à laser mesurant l'éloignement, ou une grille lumineuse assurant un palpage.

10. Système constitué d'au moins deux capteurs de sécurité optoélectroniques (10a-b) selon l'une des revendications précédentes, dans lequel l'unité d'évaluation (30, 58) est réalisée pour convertir les perspectives des capteurs de sécurité (10a-b) l'une dans l'autre.

11. Système selon la revendication 10,
dans lequel l'unité d'évaluation (30, 58) est réalisée pour répartir les zones de protection (48) sur les capteurs de sécurité (10a-b) de telle façon qu'il ne se produit aucune lacune de sécurisation.

12. Procédé pour surveiller une zone de surveillance (18) avec au moins une zone de protection (48), dans lequel la lumière provenant de la zone de surveillance (18) est convertie dans un capteur de sécurité (10) en un signal de réception, des objets (52) dans la zone de surveillance (18) sont détectés à l'aide du signal de réception, leur position, y compris leur distance par rapport au capteur de sécurité (10) est déterminée et, lors d'une reconnaissance d'une intervention inadmissible (52) d'un objet dans une zone de protection (48) un signal de sécurisation est délivré,
dans lequel, pour fixer des limites de la zone de protection, le capteur de sécurité (10) reçoit des données qui imposent la situation et la forme souhaitées de la zone de protection (48) et configure ainsi géométriquement la zone de protection (48),
**caractérisé en ce que** l'on calcule et l'on délivre la distance minimum d'objets détectés (52) par rapport à la zone de protection (48) et, on décide au moyen de la distance s'il s'agit de déclencher une fonction d'avertissement.

13. Procédé selon la revendication 12,
dans lequel la zone de protection (48) est un champ de protection bidimensionnel, dont la limite est imposée au moyen de points de soutien (50) et de tracés en courbe qui relient les points de soutien (50), dans lequel la distance d'objets détectés (52) par rapport à la zone de protection (48) est déterminée et délivrée une seule fois pour chaque tracé en courbe et/ou une seule fois pour chaque point de soutien (50).

14. Procédé selon la revendication 13,
dans lequel, au moyen d'instructions visant à modifier la position de points de soutien (50), à ajouter des nouveaux points de soutien (50), ou à supprimer des points de soutien existants (50) envoyées au capteur de sécurité (10) pendant le fonctionnement de sécurisation en cours, on impose des zones de protection (48) modifiées de façon dynamique.

15. Procédé selon l'une des revendications 12 à 14,
dans lequel au moins une zone de protection supplémentaire (60) est traitée comme zone de protection "muette" et donc comme une pure zone de mesure, en déterminant et en délivrant pour la zone de protection muette (60) uniquement des distances aux objets détectés (52) par rapport à la zone de protection (60), mais des interventions inadmissibles d'objets (52) ne sont pas reconnues, de sorte qu'une intervention dans une zone de protection muette (60) ne mène à aucun signal de sécurisation.
